# EUROPEAN PATENT SPECIFICATION

(11) **EP 2 852 023 B1**
(45) Date of publication and mention of the grant of the patent: **02.11.2016**
(21) Application number: 13290224.8
(22) Date of filing: 18.09.2013
(51) Int. Cl.: H02J 13/00

(54) **Methods of controlling or at least partly controlling energy consumption and energy provision in different hierachical levels of a power grid**
Verfahren zur Steuerung oder zumindest Teilsteuerung der Energieverbrauchs und Energieversorgung in verschiedenen hierarchischen Ebenen eines Stromnetzes
Procédés de commande ou au moins en partie du contrôle de la consommation et de la fourniture d'énergie dans différents niveaux hiérarchiques d'un réseau électrique

(43) Date of publication of application: 25.03.2015
(73) Proprietor: ALCATEL LUCENT, 92100 Boulogne-Billancourt (FR)
(72) Inventor: Klotzsche, Thomas, 10178 Berlin (DE); Hartmann, Detlef, 12623 Berlin (DE)
(74) Representative: Knecht, Ulrich Karl

(56) References cited:
- WO-A1-2012/162646
- WO-A2-2012/138235
- US-A1- 2004 260 489
- US-A1- 2006 276 938
- US-A1- 2007 271 006
- US-A1- 2010 179 704
- US-A1- 2011 231 028
- US-A1- 2012 245 744

## Description

### Field of the Invention:

The present invention relates in a first aspect to a method of at least partly controlling energy consumption and energy provision in a power grid. In a second aspect, the invention relates to a method of controlling energy consumption and energy provision in a group comprising at least one of a consumer unit, a provider unit and a storage unit, which are connected to a part of a power grid. The invention further relates to data processing devices for performing such methods.

### Background of the Invention:

Originally, power grids included a plurality of energy consumer units and one or more central energy provider units. The energy provider unit or units needed to be able to provide a maximum amount of energy according to a maximum demand from the consumer units.

In recent times, in a power grid, there are not only consumer units, but also a plurality of local provider units and local storage units. For example, a household or a plant may comprise all of a consumer unit, a provider unit and a storage unit. Thus, the need has arisen to provide some central control as to the individual energy consumption and energy provision: It has to be avoided that at certain points in time, too much energy would be consumed, or that in other points in time, there would be too much energy provided to which no consumer unit is available. Formerly known conceptions are based on measuring the actual energy consumption at the local consumer units, measuring the actual energy provided by the provider units, and sending these data to a central control unit which thereafter sends control signals in order to have individual consumer units consume less or more or to have individual provider units provide more or less. Herein, offering of incentives has been considered.

### Summay of the Invention:

It is an object of the present invention to show a way how to ensure that the desire to have an optimum energy consumption and energy provision in equilibrium is regarded on the one hand, and wherein on the other hand, the local unit such as households or industrial plants remain sufficiently free to consume or not to consume energy, to provide or not provide energy, to store or not to store energy.

A further object of the present invention is to show a way how to enable for a better distribution of energy in advance.

A still further object of the invention is to provide a method to partly control energy consumption and energy provision in a power grid by a central energy manager being of higher level than a local energy manager.

A still further object of the present invention is to provide a method of controlling energy consumption and energy provision in a group comprising at least one of a consumer unit, a provider unit and a storage unit, to be performed by a local energy manager, which is of a lower level than a central energy manager.

A still further object of the present invention lies in providing a data processing device able to act as such a central energy manager.

A still further object of the present invention lies in providing a data processing device able to act as a local energy manager.

In a first aspect, at least one of the objects is solved by a method of at least partly controlling energy consumption and energy provision in a power grid, wherein a plurality of groups comprising at least one of a consumer unit, a provider unit and a storage unit are each represented by a respective lower level energy manager and wherein the lower level energy manager is able to communicate with a higher level energy manager, each higher level energy manager representing at least two lower level energy managers, said method being performed by one of the higher level managers and including the steps of:
- receiving a request sent by a first lower level energy manager for consuming or providing a particular first amount of energy for a future interval in time,
- determining to what extent the request may be complied with according to a first pre-determined criterion,
- responding to the request by indicating to said first lower level energy manager a second amount of energy for said future interval in time, which is the same as or different from the first amount of energy.
and wherein the higher level energy manager (CEM) emits a clock signal for synchronizing the respective lower energy managers such as to be able to divide the overall time slots, and wherein the future interval in time is a future time slot.

In a second aspect, at least one of the objects above is solved by a method of controlling energy consumption and energy provision in a group comprising at least one of a consumer unit, a provider unit and a storage unit, said method being performed by a lower level energy manager able to communicate with a higher level energy manager representing a plurality of lower level energy managers, wherein the higher level energy manager (CEM) emits a clock signal for synchronizing the respective lower energy managers such as to be able to divide the overall time slots, and wherein the future interval in time is a future time slot and said method including:
- determining for a future interval in time a need for energy to be consumed or stored and/or an offer for energy to be provided for the individual units of the group, and calculating a first total energy amount to be consumed or provided on the basis thereof,
- sending to the higher level energy manager a request for said first energy amount to be consumed or provided for the first interval in time,
- receiving from the higher level energy manager a response indicating a second energy amount to be consumed or provided identical to or different from said first energy amount for the first interval in time;
- determining according to a third pre-determined criterion if a final energy amount equal to or different from said second energy amount is to be consumed, stored or provided, respectively, by the individual units of the group,
- controlling the units according to the result of the step of determining.

In a third aspect of the invention, at least one of the objects above is solved by a data processing device able to act as a higher level energy manager and comprising:
- a clock for defining time slots as future time intervals, wherein the higher level energy manager (CEM) emits a clock signal for synchronizing the respective lower energy managers such as to be able to divide the overall time slots, and wherein the future interval in time is a future time slot
- a first interface for receiving a request sent by another data processing device acting as a lower level energy manager for consuming or providing a particular first amount of energy for a first time slot,
- means for determining according to a first pre-determined criterion to what extent the request may be complied with,
- means for responding via said first interface or a second interface of said data processing device to the request by indicating a second amount of energy for said first time slot, said second amount of energy being the same as or different from said first amount of energy.

In a fourth aspect of the present invention, at least one of the above objects is solved by a data processing device able to act as a lower level energy manager and comprising:
- at least one first interface for communicating with at least one unit of the group comprising a consumer unit, provider unit and a storage unit,
- means for determining a total first energy amount of all the units to which a first interface is provided on the basis of data received from these units,
- a second interface for sending a request for the first energy amount to another data processing device acting as a higher level energy manager and for receiving a response thereof, wherein the higher level energy manager (CEM) emits a clock signal for synchronizing the respective lower energy managers such as to be able to divide the overall time slots, and wherein the future interval in time is a future time slot
- means for providing control signals to said units via the at least one first interface on the basis of a response received via the second interface.

In a preferred embodiment of the first aspect, the method comprises receiving a request or indication for consuming or providing a particular third or further amount of energy for the same future interval in time by at least one second lower level energy manager, respectively, and combining all requested first amounts of energy and third or further amounts of energy to define a virtual energy packet, wherein in the determining step, this virtual energy packet is used when applying the first pre-determined criterion.

In the preferred embodiment, the higher level energy manager emits a clock signal for synchronizing the respective lower level energy managers such as to be able to divide the overall time in time slots, and wherein the future interval in time is a future time slot. Alternatively, the synchronizing might be provided by means of signals from external sources. Thus sources can be satellites, as, e.g. provided by the Global Positioning System, GPS. Such external sources can equally be servers in the world wide web providing a synchronization information via the Network Time Protocol.

When combining the two preferred embodiments described above, a further preferred embodiment includes that for each time slot, the virtual energy packet is defined of the basis of possible received requests or indications relating to the respective time slots.

In a further preferred embodiment of the first aspect, responding to the requests includes indicating a proposed fourth amount of energy for said future interval in time different from said first amount of energy together with an indication of an incentive relating thereto.

A still further preferred embodiment of the method comprises the step of receiving an indication from said first lower level energy manager indicating the intended amount of energy to be consumed or produced for said future interval in time.

A still further embodiment of the first aspect includes that at least two higher level energy manager are able to communicate with a second degree higher level energy manager (i.e. a manager which is still higher in the hierarchy) representing the at least two higher level managers, and wherein the respective higher level managers, either immediately after the receiving of requests and/or after the receiving of indications indicating the intended amount of energy to be consumed or provided by a lower level energy manager, determine, according to a second pre-determined criterion, whether or not there is a sufficient equilibrium of energy consumption and energy provision for said future interval in time in the respective groups represented by the lower level energy managers relating to the respective higher level manager, and if not, send a request for consuming and providing a particular fifth or further amount of energy to the second degree higher level manager.

In a preferred embodiment of the second aspect, in the determining step it is determined whether the final energy amount to be consumed or produced, respectively, is equal to the second energy amount to be consumed or produced, respectively, is equal to the second energy amount, or whether it is equal to the first energy amount, or whether it is equal to the first energy amount, or whether it is in between of the second energy amount and the first energy amount.

In another preferred embodiment of the second aspect, after the step of determining, an indication is sent to the higher level energy manager indicating the final energy amount.

In a still further embodiment of the second aspect, in the step of determining, a level of severity indicated and attributed to the second energy amount and/or an incentive indicated is respected when applying the third pre-determined criterion.

In a preferred embodiment of the third aspect, the means for determining is adapted to combine amounts of energy indicated in requests or indications for a future interval in time received via the first interface to define a virtual energy packet for that future interval in time and to define the second amount of energy for that future interval in time on the basis of the virtual energy packet.

### Brief Description of the Figures:

The present invention will be more completely understood by the following detailed description of embodiments of the present invention with reference to the figures. In these:
- Fig. 1: shows the arrangement of local energy managers and of a central energy manager relating to a power grid;
- Fig. 2: shows a scheme of the interchange of messages in a novel protocol disclosed herein;
- Fig. 3: illustrates the conception of virtual energy packets relating to individual time slots;
- Fig. 4: illustrates a particular example of how such energy packets are defined by individual local energy managers, and how the virtual energy packet is defined in the central energy manager;
- Fig. 5: illustrates an example of how to perform a method of at least controlling energy consumption and energy provision in a most efficient way.

### Detailed Description of the Embodiments

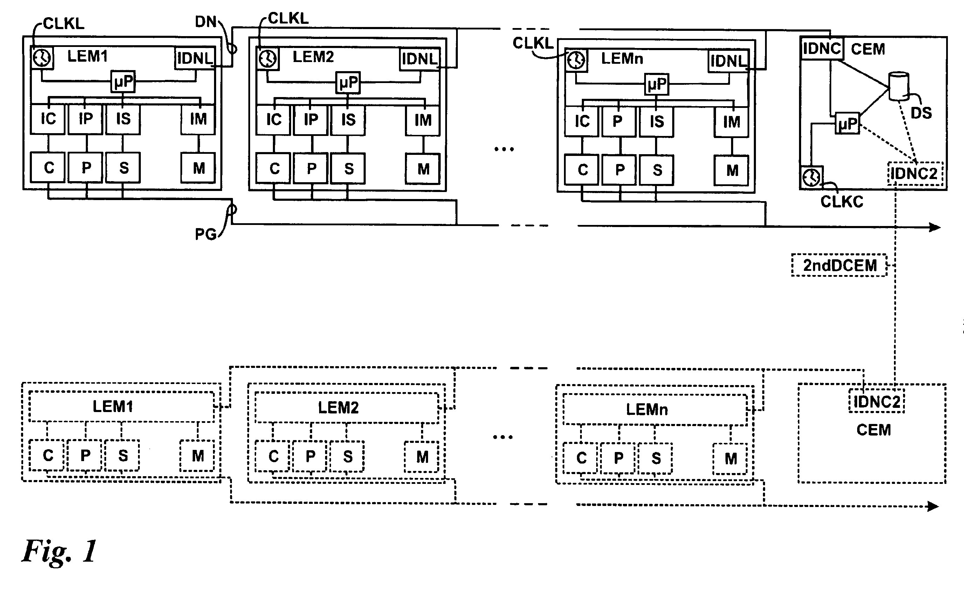

Fig. 1 shows an arrangement of data processing devices which may implement the inventive method. These data processing devices relate to the power grid PG and are linked themselves via the data network DN.

In the power grid PG, the smallest units are designated by the letters "C", "P" and "S". The letter "C" represents one or more energy consuming devices, i.e. a single apparatus such as a household appliance, and the like, or a whole entity comprising several of such household appliances, or the like. The letter "P" represents one or more energy producing devices such as a solar panel or wind wheel current generator, or an entity comprising more than one of such energy producing devices. The letter "S" designates one or more energy storage devices such as a rechargeable battery, an entity comprising more than one of these, or the like.

In the data network DN, the individual units (nodes) are called energy managers or energy manager nodes. The energy managers are arranged in a hierarchy. The lower level energy manager is herein called a local energy manager (or local energy manager node) and represents the group consisting of an energy consumer unit (consumer device(s)), an energy producing (providing) unit, (energy producing device(s)) and/or an energy storage unit (energy storage device(s)). It is to be noted that figure 1 shows several local energy managers, LEM 1, LEM 2, ... and LEM n having each all of the units C, P and S. However, not every LEM needs to represent all of these kinds of units at the same time: A real so-called "prosumer" includes a management system with at least one controllable energy storage device and (optionally) a power providing or a power consuming device. In the power grid PG, energy may flow from this system or to the system. A different type may be a controllable consumer, wherein there are controllable power consuming devices provided in a management system. Energy flows only from the power grid PG to the system. In a third type, the second type is complemented with a measurement device M indicating the current power consumption. A fourth type may be a mere producer/provider: A management system comprises controllable power producing/providing devices, wherein energy flows from the system to the power grid PG.

Each local energy manager represents the smallest entity in the data network DN and thus refers to an individual household, an industrial plant or a part thereof, a (solar or wind) energy providing farm, and the like.

The higher level energy manager nodes are herein called the central energy managers (or central energy manager nodes) and each represent a plurality of lower energy managers. Optionally, the data network DN may include a still higher hierachical level wherein a plurality of central energy managers (CEMs) are connected to a second degree central energy manager. What is disclosed herein as to the relationship of the lower energy managers (LEMs) to the respective central energy managers (CEMs) is similarly valid as to the relationship between the central energy managers (CEMs) and the second degree energy managers (2ndDCEM). In particular, those messages described to be sent by the LEMs to the CEM might equally be sent from the CEM to the 2ndDCEM, and the messages described to be sent from the CEM to the LEMs might equally be sent from the 2ndDCEM within individual CEMs.

It is to be noted that the data processing devices (the nodes, LEMs and CEMs and second degree CEMs) are not necessarily themselves connected to the power grid. However, each LEM is coupled via a first interface IC, IP and/or IS to the respective unit C, P and/or S. Hence, these units may send signals to the local energy manager which reacts thereto. There may be a metering unit M coupled to a respective LEM via a first interface IM. Each local energy manager has a micro processor µP, a micro controller or the like. Each local energy manager is provided with a clock CLKL.

The communication via the data network DN can be established via a second interface IDNL.

The central energy managers likewise comprise an interface IDNC coupling it with the data network DN.
The central energy managers CEM equally are provided with a micro processor µP, micro controller, or the like. Furthermore, they are provided with a clock CLKC. Still further, they are provided with a data storage means, or memory, DS.
Optionally, each CEM can communicate via a further interface IDNC2 with a 2ndDCEM. The 2ndDCEM includes similar units than as described hereinbefore as to the CEM.

In the data storage DS, the CEM is provided with information as to each LEM and the respective consumer units, provider units and storage units. This enables the central energy managers CEMs to perform particular algorithms, which will be mentioned below.

The clock CLKC of the CEM sends synchronizing signals via the data network DN to the individual LEMs to have their individual clocks CLKL be synchronized to the central clock CLKC. When all clocks in the data network DN are synchronized, the idea of time slots may be used. A time slot is nothing else than a time interval used for planning. Hence, usually, a time slot is initially a future time interval. The invention is not limited to clocks in the individual nodes sending synchronizing signals. Rather, such synchronizing signals can be provided by external sources such as satellites (for example those of the Global Positioning System, GPS) or specific servers in the world wide web. From the internet it is known that such servers can provide synchronizing signals by using the Network Time Protocol, NTP.

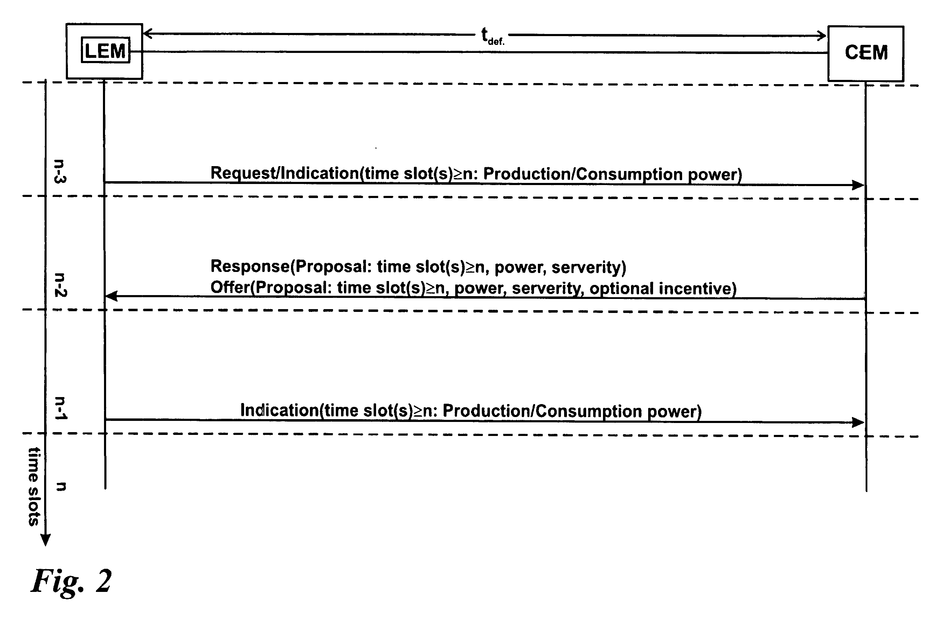

The method described hereinafter with regard to fig. 2 makes use of there being well-defined time slots.

The method is based on planning beforehand the energy consumption and provision in the power grid PG. The planning is not provided by the central energy manager alone, but in co-operation which the local energy managers LEM 1, LEM 2, ... , LEM n.

Fig. 2 shows a representative LEM relating to its CEM, wherein the time is synchronized (see the double-arrow t_{def}.)

The method is explained with regard to what shall happen in a particular time slot being indicated as time slot n in a consecutive numbering. The method starts at time slot n-3, i.e. three times slots before the time slot n for which the plan is provided. In time slot n-3, the LEM sends a request indicating to the CEM for at least the time slot n or possibly for further time slots, which power is needed to be consumed, or which power can be provided. The power indication is, since the time slots have all the same length, equivalent to providing an indication as to a first amount of energy. The LEM is able to provide such a prediction on the basis of the data gathered via the first interfaces IC, IP, IS, and possibly the data gathered from the metering device via first interface IM. Frequently, the LEM (or its micro processor µp) simply extrapolates the actual power consumption/provision. Actual events such as switching on or off of a device may further play a particular role. Furthermore, in the micro processor µP, an algorithm might be performed to determine which and what power/energy amount to request for.

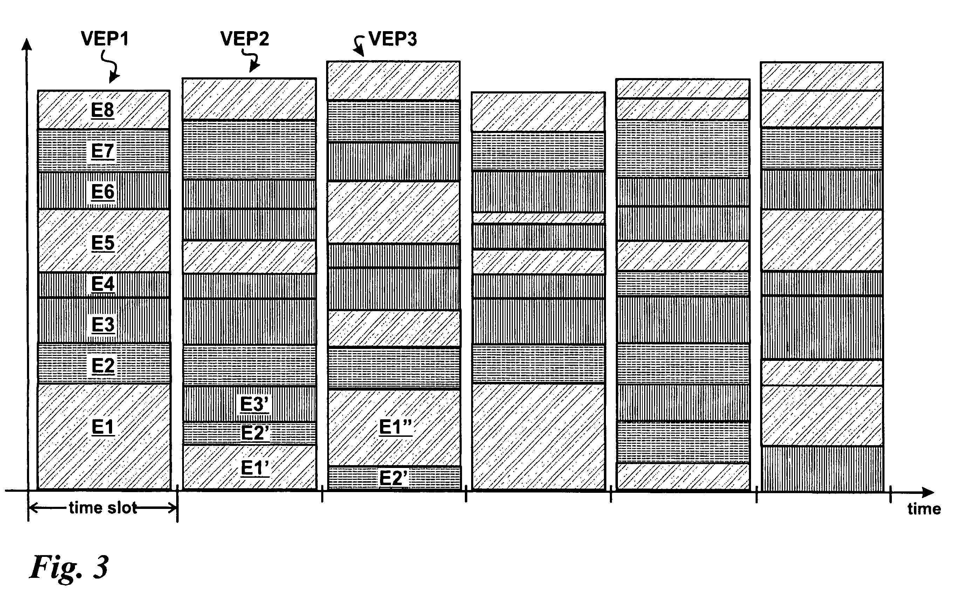

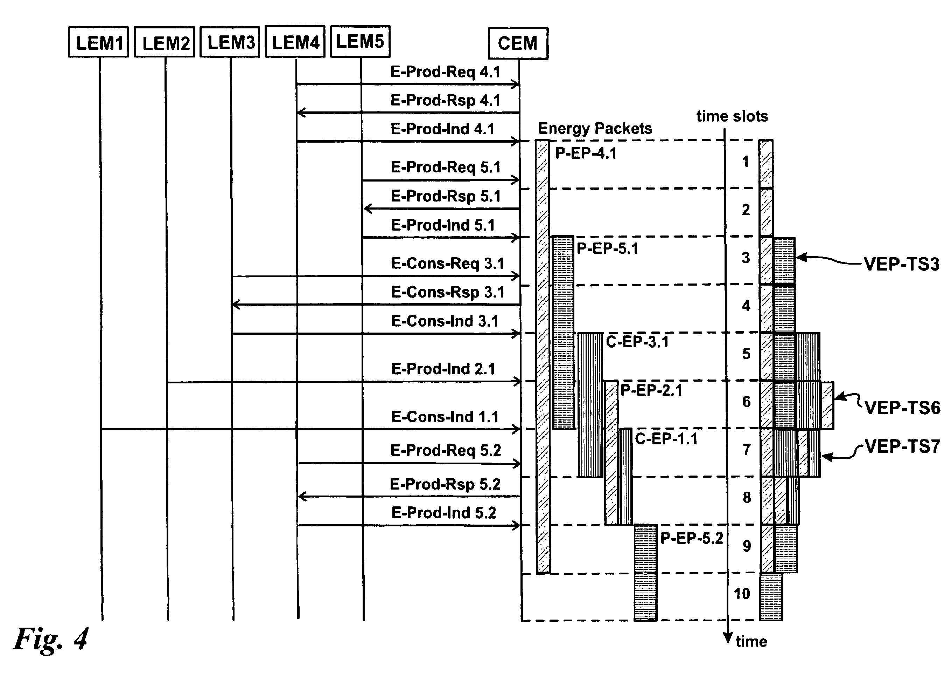

Once the LEMs have sent via IDNL a request message to the CEM, the micro processor µP of the CEM receives same with the interface IDNC. The CEM might have received only the request indicated in fig. 2, or equally further requests. The CEM is thus able to assess the overall power consumption or provision for the future time slot n, i.e. to assess which energy in total is needed. This is done via the notion of so-called "virtual energy packets" which will be described with regard to figs. 3 and 4 below.

For understanding fig. 2, it is presently sufficient to know that CEM is able to provide a response to the request sent by LEM in the next time slot n-2. It might be that CEM discovers that LEM has requested for a too high consumption power. Then, the response will be that another power (corresponding to a second energy amount) is indicated in response as to time slot n and possibly for following time slots. The CEM usually will indicate the so-called "severity" indicating to the LEM, i.e. the degree of how important it is to consume only the power indicated in the response when less than the requested consumption power. (As to consumption power, this might equally be the other way around: If there is enough energy provided, the CEM might prompt the LEM to consume more energy, i.e. to apply a higher consumption power.) What is described above with regard to consumption power equally applies as to the production power/provided energy.

In an alternative or in addition to sending the response from CEM to LEM in time slots n-2, CEM may then send an offer indicating an optional incentive together with power and severity as to the particular time slot n and possibly, further time slots following thereafter. The optional incentive might in particular be providing some credit or offering the power at a lot lower price. When the offer complements the response, usually there will be a lower consumption power or a higher production power indicated in the offer than in the response equally sent.

The LEM may react upon receiving of the response, and possibly of the offer, by performing, in the micro processor µP, an algorithm. The algorithm applies a particular pre-determined criterion with the result of the micro processor, i.e. of the LEM as a whole, deciding which power indeed to consume or to provide. For example, the LEM might "decide" to switch off a particular consumer unit or a consumer device in the consumer unit, to switch on a device in the provider unit, or to store or discharge energy from the storage unit.

Having decided how much energy to consume/to provide in the time slot, the LEM indicates, in time slot n-1, as shown in fig. 2, to the CEM the final production and/or consumption power in time slot n and possibly, in the following time slots. The CEM thus has obtained the information from the respective LEM and usually, of all of the LEMs and will be able to provide the necessary preparational steps in view of the total power consumed or provided, if not in an equilibrium.

In the CEM's micro processor µp, particular algorithms will be performed reacting to the indications in time slot n-1. These algorithms are not subject of the present application.

To summarize, we have herein described a new protocol including two kinds of messages: a request from a LEM sent to a CEM some time slots before the power is needed/offered, the response from the CEM and the offer from the CEM sent to the LEM in reaction to the request, and finally an indication from the LEM to the CEM.

With these four messages, a new particular communication system is established which enables the overall system to plan the overall energy provision/consumption in advance. This planning is neither done purely centrally by the CEM, nor purely locally by the LEMs, but rather as result of these entities communicating one with another.

Turning to fig. 3, this figure illustrates the conception of a virtual energy packet: The central energy manager CEM receives several requests and/or indications from the individual LEMs as to the future production/consumption power for one or more individual time slots. The power times the duration of the time slot (which might be e.g., between 0.5 seconds and several tens of seconds) is nothing else than a particular energy packet. The energy packets are designated in fig. 3 as E1, E2, E3, E4 and so forth. The numbering may relate to a corresponding LEM consuming or providing the respective energy packet. A first energy packet E1 may relate to energy which is consumed, a second energy packet E2 may equally relate to energy which is consumed, whilst a third and a fourth energy packet E3 and E4 might relate to energy which is provided. The individual energy packets are together coupled to define a virtual energy packet VEP1.

In the central energy manager CEM, the total sum of the amounts, with energy consumption being positive and the energy provision negative, or the other way around, will be calculated in order to assess whether or not there is an equilibrium between consumption and provision of energy in the particular time slot. Based on the information included as to the individual energy packets E1, E2, E3, ..., as to the overall virtual energy packet and the total sum, the CEM is able to perform a suitable algorithm for defining a response to the individual requests and indications sent by the LEMs.

It might be that in another virtual energy packet, VEP 2, the energy packet from one of the LEMs is reduced, compare E1 and E1'. It might further be that the energy consumed by second LEM, E2 is equally reduced, E2'. It might further be that the energy provided by a third LEM, E3, is equally reduced, E3'.

It might then be that in a further virtual energy packet VEP 3, the energy consumed by the second LEM remains the same and has been indicated very early (prior to an indication from the first LEM as to the third time slot to which VEP 3 relates). For that reason, the energy packet E2' is now shown below. The first LEM has in the meantime indicated an increase of the energy packet, with E1" being larger than E'.

Fig. 4 illustrates how such energy packet might be defined: The different LEMs are indicated as LEM 1, LEM 2, LEM 3, LEM 4 and LEM 5. The example starts with LEM 4 sending a request for indicating a particular energy packet (or production/consumption power). This is message E-Prod-Req4.1. The CEM replies with response E-Prod-Rsp4.1. Then, once again LEM 4 responds with message E-Prod-Ind4.1. This is in line with what is shown in fig. 2, in the example of an energy packet to be provided. In the following time slot, there is now known a particular energy packet P-EP-4.1 as indicated in the message E-Prod-Ind4.1. The energy packet has been indicated until the 9th time slot. In the 1 st time slot, LEM 5 sends the message E-Prod-Req5.1 and receives in the 2nd time slot the response E-Prod-Rsp5.1. and thereafter sends indication E-Prod-Ind5.1. Hence, starting from the 3rd time slot, the energy packet P-EP5.1 is known. The virtual energy packet VEP-TS3 is thus constructed by adding the energy packet P-EP-4.1 and the energy packet P-EP-5.1. In a similar manner, a consumption energy packet C-EP-3.1 is defined by messaging between LEM3 and CEM. Then, LEM2 only sends an indication. It is to be noted that some of the LEMs might not be provided with the ability to send a request, but are provided with a metering unit only and are thus able to only indicate the future consumption/provision of energy. Hence, LEM2 sends the message E-Prod-Ind2.1 in the 5th time slot as to the 6th time slot and the following two time slots, and equally LEM1 sends an indication in the 6th time slot as to the 7th and 8th time slots. Respective virtual energy packets VEP-TS6 and VEP-TS-7 can thus be formed by CEM. Since the validity of the message E-Prod-Ind5.1 has expired with the end of the 2nd time slot, the LEM5 can send a novel request E-Prod-Req5.2 in the 7th time slot, receives a response E-Prod-Rsp5.2 in the 8th time slot and thus finally indicates energy packet P-EP-5.2 by the message E-Prod-Ind5.2.

The method may proceed continuously following the 10th time slot as shown in fig. 4.

From the explanation with regard to fig. 4, it is thus clear that the individual LEMs only send requests and/or indications in case that in a future time slot, a change in the consumption of preparation of energy/of electrical power will occur.

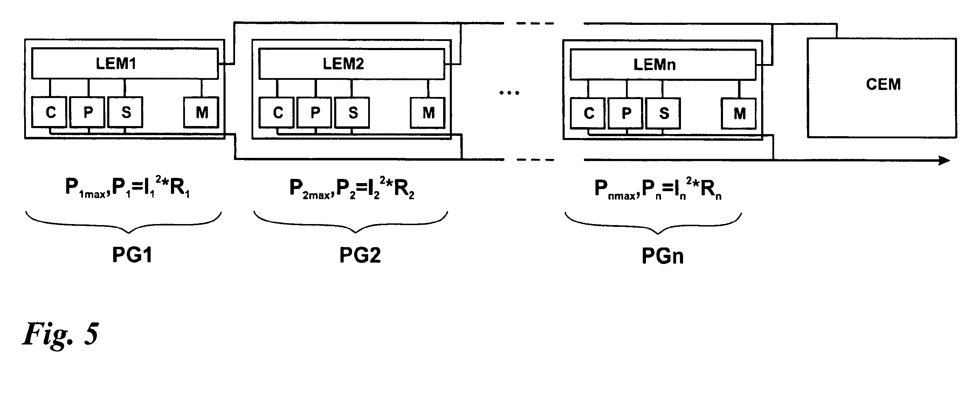

The above-described method might be used to provide for grid stabilisation by energy loss minimisation, as will be explained hereinafter even after with regard to fig. 5.

In fig 5, the grid is provided in individual grid portions PG1, PG2, ..., PGn. The overall aim shall now be to provide a minimum energy loss on transmission wires by using a particular scheduling algorithm as explained above. The power consumed in a particular power grid portion PGᵢ corresponds to Pᵢ=Iᵢ² x Rᵢ, with Rᵢ being the resistance of the transmission line in the power grid portion PGᵢ and lᵢ being the current flowing there through. The overall aim is that the sum of all Pᵢ is at a minimum, wherein each Pᵢ shall be smaller than the maximum power the transmission wires may support, Pᵢ_max. The CEM will, by performing a suitable algorithm in its micro processor µP, provide upon individual request of the LEMs LEM 1, LEM 2, ..., LEMn respective responses. In case that there is the risk that a particular current lᵢ will become too high, the CEM will indicate a higher degree of the severity to one of the LEMs prompting same at least in part to reduce the energy consumption/energy provision. It has to be noted that in view of overall equilibrium, the CEM might at the same time send a request to one of the LEMs indicating that more energy needs to be consumed and to another LEM that less energy shall be consumed. This depends on the information stored in data storage DS, namely the position of the individual units C, P, S in the overall power grid PG, or the kind of units C, P, S it is dealt with.

The method described above, and in particular the protocol/the manner of messaging described above may apply to all kinds of power grids and different applications, in particular those differing from the particular example of fig. 5.

The functions of the various elements shown in the figures, including any functional blocks indicated to be data processing devices or micro processors, may be provided with the use of dedicated hardware as well as hardware capable of executing software in conjunction with appropriate software. The use of the term "processor" or "controller" should in particular not be construed to refer exclusively to hardware capable of the executing software, and may implicitly include, without limitation, digital signal processor (DSP) hardware, network processor, application specific integrated circuit (ASIC), field programmable gate array (FPGA), read on by memory (ROM) for storing software, random excess memory (RAM) and non-volatile storage. Other hardware, conventional and/or custom, may also be included.

## Claims

1. A method of at least partly controlling energy consumption and energy provision in a power grid, wherein a plurality of groups comprising at least one of a consumer unit (C), a provider unit (P) and a storage unit (S) are each represented by a respective lower level energy manager (LEM 1, LEM 2, LEM n) and wherein each lower level energy manager (LEM 1, LEM 2, LEM n) is able to communicate with a higher level energy manager (CEM), each higher level energy manager (CEM) representing at least two lower level energy managers (LEM 1, LEM 2, LEM n), said method being performed by one of said higher level managers (CEM) and including the steps of:
- receiving a request by a first lower level energy manager (LEM 1) for consuming or providing a particular first amount of energy for a future interval in time,
- determining to what extent the request may be complied with according to a first pre-determined criterion,
- responding to the request by indicating to said first lower level energy manager (LEM 1) a second amount of energy for said future interval in time which is the same as or different from the first amount of energy, and
wherein the higher level energy manager (CEM) emits a clock signal for synchronizing the respective lower level energy managers such as to be able to divide the overall time in time slots, and wherein the future interval in time is a future time slot.

2. The method according to claim 1,
comprising receiving a request or an indication for consuming or providing a particular third or further amount of energy for the same future interval in time by at least one second lower level energy manager (LEM 2, LEM n) respectively, and combining all requested first and third or further amounts of energy to define a virtual energy packet, wherein in the determining step said virtual energy packet is used when applying the first pre-determined criterion.

3. The method according to claim 2,
wherein for each time slot, the virtual energy packet is defined on the basis of received requests or indications relating to the respective time slot.

4. The method according to anyone of the preceding claims,
wherein responding to the requests includes indicating a proposed fourth amount of energy for said future interval in time different from said first amount of energy together with an indication of an incentive relating thereto.

5. The method according to anyone of the preceding claims,
further comprising receiving an indication from said first lower level energy manager (LEM 1) indicating the intended amount of energy to be finally consumed or provided for said future interval in time.

6. The method according to anyone of the preceding claims,
wherein at least two higher level energy manager are able to communicate with a second degree higher level energy manager representing the at least two higher level energy managers, and wherein the respective higher level energy managers either immediately after the receiving of requests and/or after the receiving of indications indicating the intended amount of energy to be consumed or provided by a lower level energy manager (LEM 1, LEM 2, LEM n) determine, according to a second pre-determined criterion, whether or not there is a sufficient equilibrium of energy consumption and provision for said future interval in time in the respective groups represented by all of the lower level energy managers (LEM 1, LEM 2, LEM n) relating to said higher level energy manager (CEM), and if not, send a request for consuming or providing a particular fifth or further amount of energy to the second degree higher level energy manager.

7. A method of controlling energy consumption and energy provision in a group comprising at least one of the consumer unit (C), a provider unit (P) and a storage unit (S), said method being performed by a lower level energy manager (LEM 1, LEM 2, LEM n) able to communicate with a higher level energy manager (CEM) representing a plurality of lower level energy managers (LEM 1, LEM 2, LEM n), wherein the higher level energy manager (CEM) emits a clock signal for synchronizing the respective lower level energy managers such as to be able to divide the overall time in time slots, and wherein a future interval in time is a future time slot, and said method including:
- determining for a future interval in time a need for energy to be consumed or stored and/or an offer for energy to be provided by the individual units of the group and calculating a total first energy amount to be consumed or provided on the basis thereof,
- sending to said higher level energy manager (CEM) a request for said first energy amount to be consumed or provided for said first interval in time,
- receiving from said higher level energy manager (CEM) a response indicating a second energy amount to be consumed or provided identical to or different from said first energy amount for said first interval in time,
- determining according to a third pre-determined criterion if a final energy amount equal to or different from said second energy amount is to be consumed or, respectively, to be provided by the individual units of the group,
- controlling the units according to the result of the step of determining.

8. The method according to claim 7,
wherein in the determining step it is determined whether the final energy amount to be consumed or, respectively, to be provided is equal to the second energy amount or whether it is equal to the first energy amount, or whether it is in between the second energy amount and the first energy amount.

9. The method according to claim 7 or 8,
wherein after the step of determining, an indication is sent to the higher level energy manager (CEM) indicating the final energy amount.

10. The method according to anyone of claims 7 to 9,
wherein in the step of determining, a level of severity indicated and attributed to the second energy amount/or an incentive indicated is respected when applying the third pre-determined criterion.

11. A data processing device able to act as a higher level energy manager (CEM) and comprising:
- a clock for defining time slots as future time intervals for emitting a clock signal for synchronizing respective lower level energy managers such as to be able to divide the overall time in time slots, and wherein the future interval in time is a future time slot,
- a first interface for receiving a request sent by another data processing device acting as lower level energy manager (LEM 1, LEM 2, LEM n) for consuming or providing a particular first amount of energy for a first time slot,
- means for determining according to a first predetermined criterion to what extent the request may be complied with,
- means for responding via said first interface or a second interface of said data processing device to the request by indicating a second amount of energy for said first time slot, said second amount of energy being the same as or being different from the first amount of energy.

12. The data processing device of claim 11,
wherein said means for determining as adapted to combine amounts of energy indicated in requests or indications for a future interval in time received via that first interface to define a virtual energy packet for said future interval in time and to define said second amount of energy for said future interval in time on the basis of said virtual energy packet.

13. A data processing device able to act as a lower level energy manager (LEM 1, LEM 2, LEM n) and comprising:
- at least one first interface for communicating with at least one unit of the group comprising a consumer unit (C), a provider unit (P) and a storage unit (S),
- means for determining a total first energy amount of all the units to which a first interface is provided on the basis of data received from said units,
- a second interface for sending a request for said first energy amount to another data processing device acting as a higher level energy manager (CEM) and for receiving a response thereof, comprising means for receiving a clock signal, wherein the higher level energy manager (CEM) emits the clock signal for synchronizing the respective lower level energy managers such as to be able to divide the overall time in time slots, and wherein a future interval in time is a future time slot,
- means for providing control signals to said units (C, P, S) via the at least one first interface on the basis of a response received via this second interface.

## Patentansprüche

1. Verfahren zum mindestens teilweisen Kontrollieren des Energieverbrauchs und der Energiebereitstellung in einem Stromnetz, wobei eine Vielzahl von Gruppen mindestens eine Endverbrauchereinheit (C), eine Anbietereinheit (P) und eine Speichereinheit (S) umfasst, die jeweils durch einen entsprechenden Lower-Level-Energy-Manager (LEM 1, LEM 2, LEM n) repräsentiert werden, und wobei jeder Lower-Level-Energy-Manager (LEM 1, LEM 2, LEM n) fähig ist, mit einem Higher-Level-Energy-Manager (CEM) zu kommunizieren, wobei jeder Higher-Level-Energy-Manager (CEM) mindestens zwei Lower-Level-Energy-Manager (LEM 1, LEM 2, LEM n) repräsentiert und besagtes Verfahren von einem der besagten Higher-Level-Manager (CEM) durchgeführt wird und die folgenden Schritte umfasst:
- Empfangen einer Anforderung seitens eines ersten Lower-Level-Managers (LEM 1) zum Verbrauchen oder Bereitstellen eines bestimmten ersten Energiebetrags für ein künftiges Zeitintervall,
- Bestimmen, in welchem Maße die Anforderung erfüllt werden kann, entsprechend eines ersten vorbestimmten Kriteriums,
- Antworten auf die Anforderung durch Angabe an den ersten besagten Lower-Level-Energy-Manager (LEM 1) eines zweiten Energiebetrags für besagtes künftige Zeitintervall, welcher gleich dem ersten Energiebetrag ist oder nicht, und
wobei der Higher-Level-Energy-Manager (CEM) ein Taktsignal emittiert zum Synchronisieren der entsprechenden Lower-Level-Energy-Manager, sodass man in der Lage ist, die Gesamtzeitdauer in Zeitschlitze zu unterteilen, und wobei das künftige Zeitintervall ein künftiger Zeitschlitz ist.

2. Verfahren nach Anspruch 1,
umfassend das Empfangen einer Anforderung oder einer Angabe zum Verbrauchen oder Bereitstellen eines bestimmten dritten oder weiteren Energiebetrags für dasselbe künftige Zeitintervall durch jeweils mindestens einen zweiten Lower-Level-Energy-Manager (LEM 2, LEM n), und Kombinieren aller angeforderten ersten und dritten oder weiteren Energiebeträge zum Definieren eines virtuellen Energiepakets, wobei im Schritt des Bestimmens besagtes virtuelle Energiepaket verwendet wird, wenn das erste vorbestimmte Kriterium angewendet wird.

3. Das Verfahren nach Anspruch 2,
wobei für jeden Zeitschlitz das virtuelle Energiepaket definiert ist auf der Basis der empfangenen Anforderungen oder Angaben in Bezug auf den entsprechenden Zeitschlitz.

4. Verfahren nach einem beliebigen der vorstehenden Ansprüche,
wobei das Beantworten der Anforderungen die Angabe eines vorgeschlagenen vierten Energiebetrags für besagtes künftige Zeitintervall umfasst, der verschieden sein muss von besagtem ersten Energiebetrag, zusammen mit einer Angabe eines darauf bezogenen Bonus.

5. Verfahren nach einem beliebigen der vorstehenden Ansprüche,
weiterhin umfassend das Empfangen einer Anforderung seitens besagtem ersten Lower-Level-Energy-Manager (LEM 1) unter Angeben des beabsichtigten Energiebetrags, der letztendlich verbraucht oder bereitgestellt wird für besagtes künftige Zeitintervall.

6. Verfahren nach einem beliebigen der vorstehenden Ansprüche,
wobei mindestens zwei Higher-Level-Energy-Manager fähig sind, mit einem zweiten Higher-Level-Energy-Manager zu kommunizieren, der die mindestens zwei Higher-Level-Energy-Manager repräsentiert, und wobei die entsprechenden Higher-Level-Energy-Manager entweder sofort nach dem Empfangen der Anforderungen und/oder nach dem Empfangen von Angaben, die den zu verbrauchenden Energiebetrag oder den bereitgestellten Energiebetrag von einem Lower-Level-Energy-Manager (LEM 1, LEM 2, LEM n) angeben, in Einklang mit einem zweiten vorbestimmten Kriterium bestimmen, ob ein hinreichendes Gleichgewicht vorliegt oder nicht zwischen dem Energieverbrauch und der Bereitstellung für besagtes künftige Zeitintervall in den entsprechenden Gruppen, die von allen Lower-Level-Energy-Managern (LEM 1, LEM 2, LEM n) repräsentiert werden in Bezug auf besagten Higher-Level-Energy-Manager (CEM); andernfalls Senden einer Anforderung für den Verbrauch oder die Bereitstellung eines bestimmten fünften oder weiteren Energiebetrags an den zweiten Higher-Level-Energy-Manager.

7. Verfahren zum Kontrollieren von Energieverbrauch und Energiebereitstellung in einer Gruppe, umfassend mindestens eine Endverbrauchereinheit (C), eine Anbietereinheit (P) und eine Speichereinheit (S), wobei besagtes Verfahren durchgeführt wird von einem Lower-Level-Energy-Manager (LEM 1, LEM 2, LEM n), der fähig ist, mit einem Higher-Level-Energy-Manager (CEM) zu kommunizieren, der eine Vielzahl von Lower-Level-Energy-Managern (LEM 1, LEM 2, LEM n) repräsentiert, wobei der Higher-Level-Energy-Manager (CEM) ein Taktsignal emittiert zum Synchronisieren der entsprechenden Lower-Level-Energy-Manager, sodass man in der Lage ist, die Gesamtzeit in Zeitschlitze zu unterteilen, und wobei ein künftiges Zeitintervall ein künftiger Zeitschlitz ist und wobei besagtes Verfahren umfasst:
- Bestimmen des zu verbrauchenden oder zu speichernden Energiebedarfs für ein künftiges Zeitintervall und/oder eines Energieangebots, das von den einzelnen Einheiten der Gruppe bereitzustellen ist und Berechnen eines gesamten ersten Energiebetrags, der zu verbrauchen oder bereitzustellen ist auf der entsprechenden Basis,
- Senden an besagten Higher-Level-Energy-Manager (CEM) einer Anforderung für besagten ersten zu verbrauchenden oder bereitzustellenden Energiebetrag für besagtes erstes Zeitintervall,
- Empfangen von besagtem Higher-Level-Energy-Manager (CEM) einer Antwort unter Angabe eines zweiten zu verbrauchenden oder bereitzustellenden Energiebetrags, der gleich dem ersten besagten Energiebetrag für besagtes erstes Zeitintervall ist oder nicht,
- Bestimmen, in Einklang mit einem dritten vorbestimmten Kriterium, ob ein endgültiger Energiebetrag gleich dem besagten zweiten Energiebetrag ist oder nicht, der zu verbrauchen ist oder entsprechend bereitgestellt werden muss von den einzelnen Einheiten der Gruppe;
- Kontrollieren der Einheiten in Einklang mit dem Ergebnis des Schrittes des Bestimmens.

8. Verfahren nach Anspruch 7,
wobei im Schritt des Bestimmens bestimmt wird, ob der endgültige Energiebetrag, der zu verbrauchen ist oder der entsprechend bereitzustellen ist, gleich dem zweiten Energiebetrag ist oder nicht, oder ob er gleich dem ersten Energiebetrag ist oder nicht, oder ob er zwischen dem zweiten Energiebetrag und dem ersten Energiebetrag liegt.

9. Verfahren nach Anspruch 7 oder 8,
wobei nach dem Schritt des Bestimmens eine Angabe an den Higher-Level-Energy-Manager (CEM) gesendet wird unter Angeben des endgültigen Energiebetrags.

10. Verfahren nach einem beliebigen der Ansprüche 7 bis 9,
wobei im Schritt des Bestimmens ein angegebener und dem zweiten Energiebetrag zugewiesener Schweregrad/oder ein angegebener Bonus berücksichtigt wird, wenn das dritte vorbestimmte Kriterium angewendet wird.

11. Eine Datenverarbeitungsvorrichtung, die fähig ist, als Higher-Level-Energy-Manager (CEM) zu fungieren, umfassend:
- eine Uhr zum Definieren der Zeitschlitze als künftige Zeitintervalle zum Emittieren eines Taktsignals zum Synchronisieren der entsprechenden Lower-Level-Energy-Manager, sodass man in der Lage ist, die Gesamtzeitdauer in Zeitschlitze zu unterteilen, und wobei das künftige Zeitintervall ein künftiger Zeitschlitz ist,
- eine erste Schnittstelle zum Empfangen einer Anforderung, die von einer anderen Datenverarbeitungsvorrichtung gesendet worden ist, die als Lower-Level-Energy-Manager (LEM 1, LEM 2, LEM n) fungiert zum Verbrauchen oder Bereitstellen eines bestimmten ersten Energiebetrags für einen künftigen Zeitschlitz,
- Mittel zum Bestimmen, in Einklang mit einem ersten vorbestimmten Kriterium, in welchem Maße die Anforderung erfüllt werden kann,
- Mittel zum Beantworten, über besagte erste Schnittstelle oder eine zweite Schnittstelle von besagter Datenverarbeitungsvorrichtung, der Anforderung durch Angeben eines zweiten Energiebetrags für besagten ersten Zeitschlitz, wobei der zweite Energiebetrag gleich dem ersten Energiebetrag ist oder nicht.

12. Datenverarbeitungsvorrichtung nach Anspruch 11,
wobei besagte Mittel zum Bestimmen ausgelegt sind für das Kombinieren der Energiebeträge, die in den Anforderungen angegeben sind, oder der Angaben für ein künftiges Zeitintervall, die über diese erste Schnittstelle empfangen worden sind, zum Definieren eines virtuellen Energiepakets für besagtes künftiges Zeitintervall und zum Definieren besagten zweiten Energiebetrags für besagtes künftige Zeitintervall auf der Basis besagten virtuellen Energiepakets.

13. Datenverarbeitungsvorrichtung, die fähig ist, als Lower-Level-Energy-Manager (LEM 1, LEM 2, LEM n) zu fungieren, umfassend:
- mindestens eine erste Schnittstelle zum Kommunizieren mit mindestens einer Einheit der Gruppe, umfassend eine Endverbrauchereinheit (C), eine Anbietereinheit (P) und eine Speichereinheit (S),
- Mittel zum Bestimmen eines gesamten ersten Energiebetrags aller Einheiten, für die eine erste Schnittstelle bereitgestellt wird auf der Basis der von besagten Einheiten erhaltenen Daten,
- eine zweite Schnittstelle zum Senden einer Anforderung für besagten ersten Energiebetrag an eine andere Datenverarbeitungsvorrichtung, die als Higher-Level-Energy-Manager (CEM) fungiert und zum Empfangen einer Antwort darauf, umfassend Mittel für das Empfangen eines Taktsignals,
wobei der Higher-Level-Energy-Manager (CEM) das Taktsignal emittiert zum Synchronisieren der entsprechenden Lower-Level-Energy-Manager, sodass man in der Lage ist, die Gesamtzeit in Zeitschlitze zu unterteilen, und wobei ein künftiges Zeitintervall ein künftiger Zeitschlitz ist,
- Mittel zum Bereitstellen von Kontrollsignalen für besagte Einheiten (C, P, S) über die mindestens eine erste Schnittstelle auf der Basis einer über diese zweite Schnittstelle erhaltenen Antwort.

## Revendications

1. Procédé de contrôle au moins partiel de la consommation d'énergie et de la fourniture d'énergie dans un réseau électrique, dans lequel une pluralité de groupes comprenant au moins une unité parmi une unité consommatrice (C), une unité de production (P) et une unité de stockage (S) sont chacun représentés par un gestionnaire d'énergie de niveau inférieur respectif (LEM 1, LEM 2, LEM n) et dans lequel chaque gestionnaire d'énergie de niveau inférieur (LEM 1, LEM 2, LEM n) peut communiquer avec un gestionnaire d'énergie de niveau supérieur (CEM), chaque gestionnaire d'énergie de niveau supérieur (CEM) représentant au moins deux gestionnaires d'énergie de niveau inférieur (LEM 1, LEM 2, LEM n), ledit procédé étant exécuté par l'un desdits gestionnaires de niveau supérieur (CEM) et comprenant les étapes suivantes :
- recevoir d'un premier gestionnaire d'énergie de niveau inférieur (LEM 1) une demande de consommation ou de fourniture d'une première quantité d'énergie particulière pour un intervalle de temps futur,
- déterminer dans quelle mesure la demande peut être satisfaite selon un premier critère prédéterminé,
- répondre à la demande en indiquant audit premier gestionnaire d'énergie de niveau inférieur (LEM 1) une deuxième quantité d'énergie pour ledit intervalle de temps futur qui est identique à ou différente de la première quantité d'énergie, et dans lequel le gestionnaire d'énergie de niveau supérieur (CEM) émet un signal d'horloge pour synchroniser les gestionnaires d'énergie de niveau inférieur respectifs de façon à pouvoir diviser le temps total en créneaux temporels, et dans lequel l'intervalle de temps futur est un créneau temporel futur.

2. Procédé selon la revendication 1,
comprenant la réception d'une demande ou d'une indication de consommation ou de fourniture d'une troisième quantité d'énergie particulière ou d'autres quantités d'énergie particulières pour le même intervalle de temps futur en provenance d'au moins un deuxième gestionnaire d'énergie de niveau inférieur (LEM 2, LEM n) respectivement, et la combinaison de toutes les première et troisième ou autres quantités d'énergie demandées afin de définir un paquet d'énergie virtuel, dans lequel au cours de l'étape de détermination ledit paquet d'énergie virtuel est utilisé lors de l'application du premier critère prédéterminé.

3. Procédé selon la revendication 2,
dans lequel pour chaque créneau temporel, le paquet d'énergie virtuel est défini sur la base des demandes ou indications reçues concernant le créneau temporel correspondant.

4. Procédé selon l'une quelconque des revendications précédentes,
dans lequel l'étape de réponse aux demandes inclut l'indication d'une quatrième quantité d'énergie proposée pour ledit intervalle de temps futur différente de ladite première quantité d'énergie ainsi qu'une indication d'incitation s'y rapportant.

5. Procédé selon l'une quelconque des revendications précédentes,
comprenant en outre la réception d'une indication dudit premier gestionnaire d'énergie de niveau inférieur (LEM 1) précisant la quantité d'énergie prévue pour être finalement consommée ou fournie dans ledit intervalle de temps futur.

6. Procédé selon l'une quelconque des revendications précédentes,
dans lequel au moins deux gestionnaires d'énergie de niveau supérieur peuvent communiquer avec un gestionnaire d'énergie de niveau supérieur de second degré représentant les deux gestionnaires d'énergie de niveau supérieur au moins, et dans lequel les gestionnaires d'énergie de niveau supérieur respectifs, immédiatement après la réception de demandes et/ou après la réception d'indications précisant la quantité d'énergie prévue pour être consommée ou fournie en provenance d'un gestionnaire d'énergie de niveau inférieur (LEM 1, LEM 2, LEM n), déterminent, selon un deuxième critère prédéterminé, s'il existe ou non un équilibre suffisant entre la consommation et la fourniture d'énergie pour ledit intervalle de temps futur dans les groupes respectifs représentés par tous les gestionnaires d'énergie de niveau inférieur (LEM 1, LEM 2, LEM n) relatifs audit gestionnaire d'énergie de niveau supérieur (CEM), et si ce n'est pas le cas, envoient une demande de consommation ou de fourniture d'une cinquième quantité d'énergie particulière ou d'autres quantités d'énergie particulières au gestionnaire d'énergie de niveau supérieur de deuxième degré.

7. Procédé de contrôle de la consommation d'énergie et de la fourniture d'énergie dans un groupe comprenant au moins une unité parmi une unité consommatrice (C), une unité de production (P) et une unité de stockage (S), ledit procédé étant exécuté par un gestionnaire d'énergie de niveau inférieur (LEM 1, LEM 2, LEM n) pouvant communiquer avec un gestionnaire d'énergie de niveau supérieur (CEM) représentant une pluralité de gestionnaires d'énergie de niveau inférieur (LEM 1, LEM 2, LEM n), dans lequel le gestionnaire d'énergie de niveau supérieur (CEM) émet un signal d'horloge pour synchroniser les gestionnaires d'énergie de niveau inférieur respectifs de façon à pouvoir diviser le temps total en créneaux temporels, et dans lequel l'intervalle de temps futur est un créneau temporel futur, et ledit procédé incluant les étapes suivantes :
- déterminer pour un intervalle de temps futur un besoin en énergie à consommer ou à stocker et/ou une offre d'énergie à fournir par les unités individuelles du groupe et calculer une première quantité d'énergie totale à consommer ou à fournir sur cette base,
- envoyer audit gestionnaire d'énergie de niveau supérieur (CEM) une demande concernant ladite première quantité d'énergie à consommer ou à fournir pour ledit premier intervalle de temps,
- recevoir dudit gestionnaire d'énergie de niveau supérieur (CEM) une réponse indiquant une deuxième quantité d'énergie à consommer ou à fournir identique à ou différente de ladite première quantité d'énergie pour ledit premier intervalle de temps,
- déterminer selon un troisième critère prédéterminé si une quantité d'énergie finale égale à ou différente de ladite deuxième quantité d'énergie est à consommer ou, respectivement, à fournir par les unités individuelles du groupe,
- commander les unités selon le résultat de l'étape de détermination.

8. Procédé selon la revendication 7,
dans lequel au cours de l'étape de détermination il est déterminé si la quantité d'énergie finale à consommer ou, respectivement, à fournir est égale à la deuxième quantité d'énergie ou si elle est égale à la première quantité d'énergie, ou si elle se situe entre la deuxième et la première quantité d'énergie.

9. Procédé selon les revendications 7 ou 8,
dans lequel après l'étape de détermination, une indication est envoyée au gestionnaire d'énergie de niveau supérieur (CEM) précisant la quantité d'énergie finale.

10. Procédé selon l'une quelconque des revendications 7 à 9,
dans lequel au cours de l'étape de détermination, un niveau de gravité indiqué et attribué à la deuxième quantité d'énergie ou une incitation indiquée sont respectés lors de l'application du troisième critère prédéterminé.

11. Dispositif de traitement de données capable d'agir comme un gestionnaire d'énergie de niveau supérieur (CEM) et comprenant :
- une horloge destinée à définir des créneaux temporels comme intervalles de temps futurs et à émettre un signal d'horloge pour synchroniser les gestionnaires d'énergie de niveau inférieur respectifs de façon à pouvoir diviser le temps total en créneaux temporels, et dans laquelle l'intervalle de temps futur est un créneau temporel futur,
- une première interface destinée à recevoir une demande envoyée par un autre dispositif de traitement de données agissant comme un gestionnaire d'énergie de niveau inférieur (LEM 1, LEM 2, LEM n) pour consommer ou fournir une première quantité d'énergie particulière dans un premier créneau temporel,
- des moyens destinés à déterminer selon un premier critère prédéterminé dans quelle mesure il est possible de satisfaire la demande,
- des moyens destinés à répondre à la demande via ladite première interface ou via une deuxième interface dudit dispositif de traitement de données en indiquant une deuxième quantité d'énergie pour ledit premier créneau temporel, ladite deuxième quantité d'énergie étant identique à ou différente de la première quantité d'énergie.

12. Dispositif de traitement de données selon la revendication 11,
dans lequel lesdits moyens de détermination sont adaptés pour combiner les quantités d'énergie indiquées dans les demandes ou indications pour un intervalle de temps futur reçues via cette première interface afin de définir un paquet d'énergie virtuel pour ledit intervalle de temps futur et de définir ladite deuxième quantité d'énergie pour ledit intervalle de temps futur sur la base dudit paquet d'énergie virtuel.

13. Dispositif de traitement de données capable d'agir comme un gestionnaire d'énergie de niveau inférieur (LEM 1, LEM 2, LEM n) et comprenant :
- au moins une première interface destinée à communiquer avec au moins une unité du groupe comprenant une unité consommatrice (C), une unité de production (P) et une unité de stockage (S),
- des moyens destinés à déterminer une première quantité d'énergie totale pour toutes les unités auxquelles une première interface est fournie sur la base des données reçues desdites unités,
- une deuxième interface destinée à envoyer une demande pour ladite première quantité d'énergie à un autre dispositif de traitement de données agissant comme un gestionnaire d'énergie de niveau supérieur (CEM) et à recevoir une réponse s'y rapportant, comprenant des moyens pour recevoir un signal d'horloge, dans laquelle le gestionnaire d'énergie de niveau supérieur (CEM) émet le signal d'horloge pour synchroniser les gestionnaires d'énergie de niveau inférieur respectifs de façon à pouvoir diviser le temps total en créneaux temporels, et dans laquelle l'intervalle de temps futur est un créneau temporel futur,
- des moyens destinés à fournir des signaux de commande auxdites unités (C, P, S) via la ou les premières interfaces sur la base d'une réponse reçue via cette deuxième interface.
